# EUROPEAN PATENT APPLICATION

(11) **EP 2 078 641 A1**
(43) Date of publication of application: **15.07.2009**
(21) Application number: 08425013.3
(22) Date of filing: 10.01.2008
(51) Int. Cl.: B60R 16/037

(54) **On-vehicle infotelematic system and method for setting a vehicle performance profile using said system**

(71) Applicant: Fiat Group Automobiles S.p.A., 10135 Torino (TO) (IT)
(72) Inventor: Oberto, Giampiero, 10135 Torino (IT)
(74) Representative: Bergadano, Mirko

(57) **Abstract**

Described herein is an on-vehicle infotelematic system (2) comprising interface means (3) for a data-storage electronic device (5), and electronic control and processing means, integrated in the on-vehicle infotelematic system (2) and connected to the interface means (3), configured to communicate with an engine control unit. The electronic control and processing means are configured to:
• detect presence or absence of a data-storage electronic device (5) connected to the interface means (3); and
• send to the engine control unit a control signal which is a function of the presence or absence of a data-storage electronic device (5) connected to the interface means (3), in such a way that the engine electronic control unit implements a corresponding engine control mode such as to achieve a corresponding engine performance profile (*P₁*, *P₂*).

## Description

The present invention relates to an on-vehicle infotelematic system and to a method for setting a vehicle performance profile using said system.

As is known, in the automotive field the design regarding functions that can be performed by the driver or by the passengers on board a motor vehicle is more and more aimed at solutions characterized by a high interactivity between driver, passengers, motor vehicle, and outside world.

In particular, there is an increasingly greater control on the part of the driver and passengers over the functions of the motor vehicle, such as, for example, control of the air-conditioning system, of the stereo system, etc., and over the interaction of the motor vehicle with the outside world, such as, for example, management of phone calls made via the cell phone and combination thereof with listening to music, management of information coming from the on-vehicle computer, interaction with the on-vehicle satellite navigator, etc.

For the above purpose modern motor vehicles are provided with human-machine interfaces (HMIs) whereby a user, whether the driver or a passenger, can interact with the on-vehicle systems, such as, for example, enter a destination in the satellite navigation, an address or a phone number in a phone book of a handsfree on-vehicle system for management of the phone calls from the cell phone, etc.

The infotainment system Blue&Me^{™}, for example, is an on-vehicle communication and entertainment infotelematic system, developed by the present applicant, which offers Bluetooth connectivity, USB and a handsfree phone kit that can be completely controlled via voice commands. In particular, the system Blue&Me^{™} enables the driver and passengers to use personal devices, such as cell phones, palmtops, music players, or external hard disks, without having to resort to the commands for said devices so as to render use thereof during driving more convenient and less dangerous. For this purpose, the system Blue&Me^{™} is provided with a voice-recognition system, which enables access to the majority of the functions through voice commands or else with pushbuttons provided on the steering wheel of the motor vehicle. The exchange of data between the personal devices and the system Blue&Me^{™} can occur with a Bluetooth system or else thanks to a USB socket. In particular, the Bluetooth system is used for connecting the cell phones and the palmtops to the system platform, whilst the USB socket is used only for connecting music players or USB digital mass-storage devices to the system platform.

Recently moreover, in order to improve the passenger safety, in certain vehicles of a medium-to-high range and certain commercial vehicles, also a function of limitation of the maximum speed of the vehicle has been introduced. In particular, said vehicles are provided with a control system for a speed limiter, which is generally separate from the on-vehicle infotelematic systems and enables the driver, through appropriate commands, to activate/deactivate the speed limiter and set a desired limit speed that the vehicle cannot overstep as long as the speed limiter remains activated.

In the aforesaid vehicles, the use of the control system for the speed limiter is consequently left to the complete discretion of the driver, who is free to activate and deactivate the speed limiter and to set the limit speed as desired.

The aforesaid solution is particularly disadvantageous in the case where the vehicle is used by a number of users and there is the need to associate to a user a particular performance profile of the vehicle, for example, on the basis of the driving skill and experience of the user, and to guarantee that the performance profile associated with the user will be effectively implemented whenever he sits at the wheel of the vehicle.

In the case where, for example, a vehicle provided with a control system for the speed limiter of a known type is used both by a driver with a long driving experience and by a driver with little driving experience, it is possible to activate the speed limiter and set a driving profile that is suited to the driver without much experience, which, for example, limits the speed of the vehicle, but it is not possible to guarantee that the driver without much experience will in actual fact activate and set the speed limiter when he sits at the wheel of the vehicle.

Consequently, the need is felt to provide an on-vehicle infotelematic system, whereby it is possible to control setting of profiles of performance of the vehicle and that will overcome the limitations of the systems of a known type.

The aforementioned need is achieved by the present invention in so far as it regards an on-vehicle infotelematic system and a method for setting a vehicle performance profile using said system, as defined in the appended claims.

For a better understanding of the present invention a preferred embodiment is now described, purely by way of nonlimiting example and with reference to the attached drawings, wherein:
- Figure 1 is a schematic illustration of a passenger compartment of a motor vehicle provided with an on-vehicle infotelematic system according to the invention;
- Figures 2 and 3 illustrate in greater detail the on-vehicle infotelematic system of the invention; and
- Figure 4 illustrates a flowchart of the method for setting a vehicle performance profile using said system.

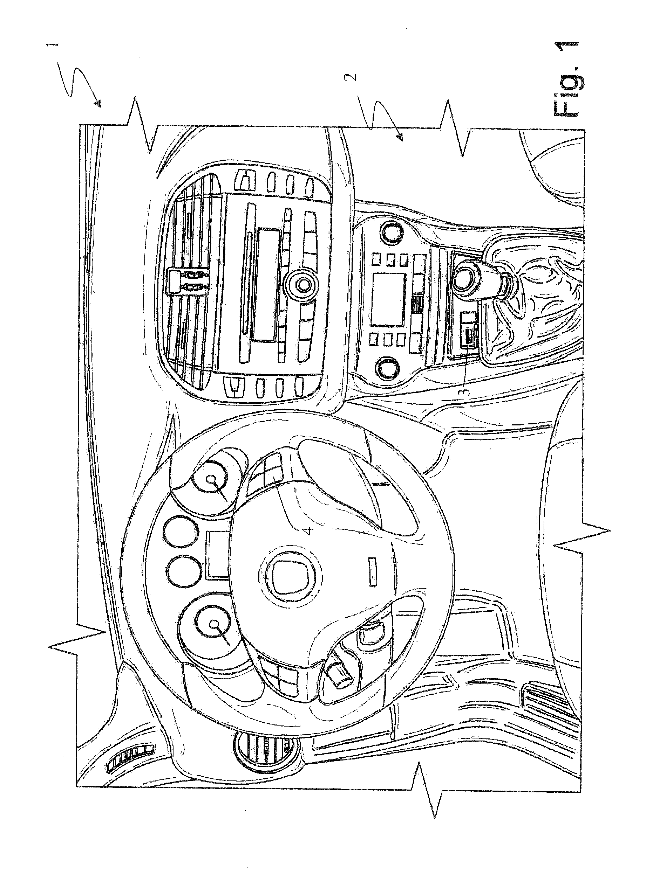

Figure 1 shows a passenger compartment 1 of a vehicle provided with an on-vehicle infotelematic system 2 (not visible to the user in so far as it is installed under the dashboard).

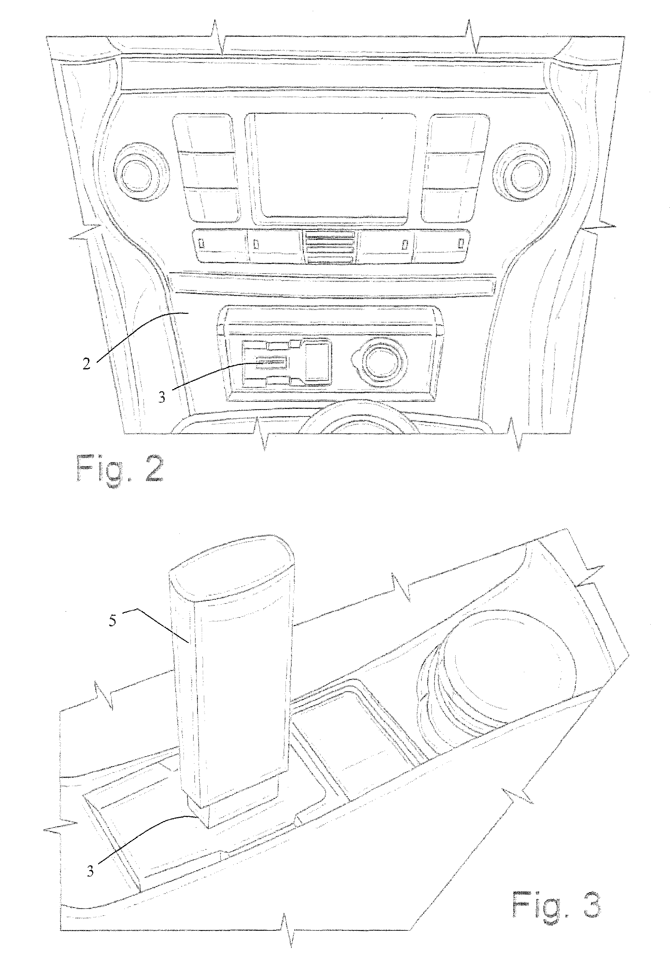

In particular, with reference to Figures 1 and 2, the on-vehicle infotelematic system 2 comprises at least one interface 3 for connection of personal electronic devices such as cell phones, palmtops, music players, or external hard disks, for example a socket of a USB type; a plurality of control pushbuttons 4 for selecting functions of the personal electronic devices, installed for example on the steering wheel of the vehicle; and an electronic control and processing unit (not illustrated in the figure), connected to the USB socket 3, to the pushbuttons 4, and to the electronic control unit (not illustrated in the figure) of the engine of the vehicle.

As is shown in Figure 3, the on-vehicle infotelematic system 2 further comprises at least one USB mass-storage device 5 and, in particular, as will be described in detail in what follows, the invention envisages that in order to be able to implement the method for controlling setting of a performance profile of the vehicle via the system 2, each driver will be provided with a respective USB device 5.

In addition, the on-vehicle infotelematic system 2 can comprise a voice-recognition system (not illustrated in the figure), for example integrated in the infotelematic system 2, which, in a way similar to the pushbuttons 4, enables the user to control the majority of the functions of personal electronic devices through voice commands, and a Bluetooth transceiving system for connection of the personal electronic devices, for example integrated in the infotelematic system 2.

In particular, the voice commands can be received by a microphone (not illustrated in the figure) that can be positioned, for example, in the roof light of the vehicle.

In particular, the Bluetooth system is particularly suitable for connecting cell phones and palmtops to the on-vehicle infotelematic system 2, whilst the USB socket is particularly suitable for connecting music players or USB digital mass-storage devices to the on-vehicle infotelematic system 2.

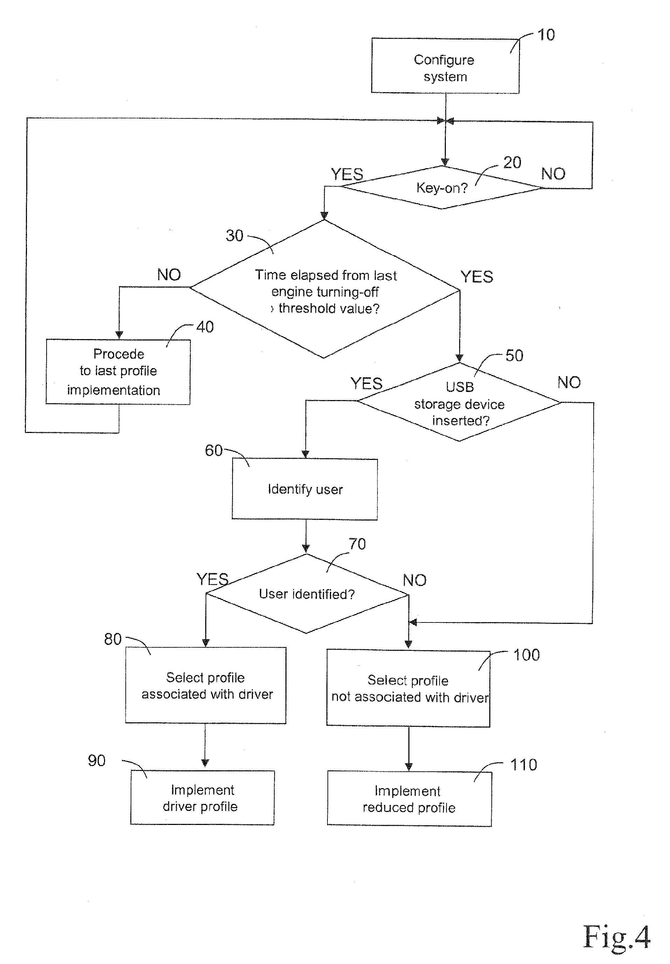

As is shown by the flowchart of Figure 4, the method for controlling setting of a performance profile of the vehicle implemented via the on-vehicle infotelematic system 2 envisages first of all a step of configuration of the electronic control unit of the engine and of the on-vehicle infotelematic system 2 (block 10), performed, for example, by the car manufacturer or by the producer of the on-vehicle infotelematic system 2.

In particular, the aforesaid configuration step envisages:
- storage in the electronic control unit of the engine of at least one database *DAT₁,* containing:
   - information corresponding to at least two different performance profiles of the vehicle, such as, for example, a performance profile *P₁* that limits the performance of the vehicle, suited, for example, to a driver without much experience, and a performance profile *P₂* that enables complete exploitation of the performance of the vehicle, suited, for example, to an experienced driver; and
   - information corresponding to control modes of the engine, necessary for obtaining the performance profiles *P₁* and *P₂*;
- storage, in the electronic control unit of the on-vehicle infotelematic system 2, of at least one database *DAT₂* containing:
   - an identifier code *C_{id}* for each driver of the vehicle;
   - information corresponding to association of a performance profile P to an identifier code *C_{id}* of a driver;
   - information corresponding to a maximum time *Tₘₑₘ* for storage of the last performance profile implemented by the electronic control unit of the engine; and
   - information corresponding to a performance profile not associated with any user identifier code, i.e., to a performance profile that the electronic control unit of the engine must implement in the case where the system 2, upon turning-on of the engine, does not identify and/or authenticate the driver; and
- storage, within each USB device 5, of the identifier code *C_{id}* of the respective driver, associated with which is a respective performance profile.

In particular, the performance profile *P₁* is configured in such a way as to limit the performance of the engine of the vehicle, for example, decrease the maximum speed that the vehicle can reach, whilst the performance profile P₂ is configured in such a way as not to limit the performance that the engine of the vehicle is able to achieve and hence to enable the driver of the vehicle to exploit the potential of the engine to the full.

In particular, the information corresponding to the control modes of the engine necessary for providing the performance profiles *P₁* and *P₂*, could, for example, be information on control modes for opening of the injectors according to the amount of fuel that it is necessary to inject in the cylinders of the engine to obtain the performance profiles *P₁* or *P₂*.

Preferably, but not necessarily, the performance profile that the electronic control unit of the engine must implement in the case where the on-vehicle infotelematic system 2 upon turning-on of the engine does not identify and/or authenticate the driver is a performance profile that limits the performance of the vehicle and that can coincide with the performance profile *P₁*.

In addition, optionally, the configuration step could envisage storage, in the database *DAT₂ of* the electronic control unit of the system 2, of an authentication code *Cₐᵤₜ* for each driver of the vehicle, associated with the identifier code *C_{id}* of the driver. Said code could be required of the driver by the on-vehicle infotelematic system 2 in order to guarantee that the driver identified by the on-vehicle infotelematic system 2 is effectively the one associated with the performance profile that the electronic control unit of the engine prepares to implement.

In the case where it is envisaged that, for example, a driver with little experience provided with a USB device 5a and an experienced driver provided with a USB device 5b alternate at the wheel of the vehicle, during the configuration step there will be stored:
- in the database *DAT₂* of the electronic control unit of the on-vehicle infotelematic system 2:
   - the identifier code *C_{id1}* of the driver with little experience, the information corresponding to the performance profile *P₁* that limits the performance of the vehicle, associated with the identifier code *C_{id1}* and, optionally, the authentication code *Cₐᵤₜ₁* of the driver with little experience;
   - the identifier code *C_{id2}* of the experienced driver, the information corresponding to the performance profile *P₂* that enhances the performance of the vehicle, associated with the identifier code *C_{id2}* and, optionally, the authentication code *Cₐᵤₜ₂* of the experienced driver; and
   - the information corresponding to the performance profile that the electronic control unit of the engine must implement in the case where the on-vehicle infotelematic system 2, upon turning-on of the engine, does not identify and/or authenticate the driver, for example the performance profile *P₂*;
- in the USB devices 5a and 5b, respectively, the identifier code *C_{id1}* of the driver with little experience and the identifier code *C_{id2}* of the experienced driver.

Once the configuration step has terminated, the on-vehicle infotelematic system 2 implements the subsequent steps of the method for controlling setting of a performance profile of the vehicle, whenever a driver inserts the ignition key and performs key-on.

In particular, once again with reference to Figure 4, when a driver performs key-on (output YES from block 20), the electronic control unit of the on-vehicle infotelematic system 2 first of all checks whether the time interval *Tₗₐₛₜ₋ₚ* elapsing between the last turning-off of the engine and the key-on is longer than the pre-set maximum time interval *Tₘₑₘ,* in which the last performance profile implemented by the electronic control unit of the engine is kept in memory by the electronic control unit of the on-vehicle infotelematic system 2 starting from turning-off of the engine (block 30).

In the case where the time interval that has elapsed from the last turning-off of the engine is shorter than the maximum time *Tₘₑₘ* for storage of the last performance profile implemented (output NO from block 30), the electronic control unit of the system 2 sends a control signal to the electronic control unit of the engine so that this (as is shown by block 40) will implement again the last performance profile implemented. The procedure described in blocks 30 and 40 enables the driver to turn off the engine for brief time intervals without having to repeat each time all the identification and authentication procedure described hereinafter.

In the case where the time interval that has elapsed from the last turning-off of the engine is longer than the maximum time *Tₘₑₘ* for storage of the last performance profile implemented (output YES from block 30), the electronic control unit of the on-vehicle infotelematic system 2 checks whether a USB device 5 containing the identifier code *C_{id}* of the driver has been inserted in the USB socket 3 (block 50), and, if so (output YES from block 50), the electronic control unit of the on-vehicle infotelematic system 2 performs a procedure of identification and authentication of the driver (block 60). For this purpose, the electronic control unit of the on-vehicle infotelematic system 2 reads the identifier code *C_{id}* stored in the USB device 5 inserted in the USB socket 3, compares it with the identifier codes *C_{id}* stored in the database *DAT₂,* and, in the case where the identifier code *C_{id}* read corresponds to one of the identifier codes stored (output YES from block 70), the electronic control unit of the on-vehicle infotelematic system 2 selects from the database *DAT₂* the performance profile associated with the identifier code (block 80) and sends to the electronic control unit of the engine the information corresponding to the performance profile selected. On the basis of the information received, the electronic control unit of the engine implements the control mode of the engine that enables the performance profile selected to be obtained (block 90).

Optionally, after identification of the driver but prior to selection of the performance profile associated with the driver identified, the electronic control unit of the on-vehicle infotelematic system 2 could be configured for requesting from the driver identified his own authentication code *Cₐᵤₜ,* for example a password, and for selecting the performance profile associated with the driver identified only in the case where the driver enters in the on-vehicle infotelematic system 2 his own authentication code *Cₐᵤₜ*, for example, via the voice-recognition system or the pushbuttons 4.

In this way, there is a guarantee that the driver identified by the on-vehicle infotelematic system 2 is effectively the one associated with the performance profile that the electronic control unit of the engine prepares to implement.

In the case where the driver does the on-vehicle infotelematic system 2 system 2 (output NO from block 50) or in the case where the driver inserts the USB device 5 in the USB socket 3 but the identification procedure and, optionally, the authentication procedure is not successful (output NO from block 70), for example either because the identifier code *C_{id}* read does not corresponds to any code stored in the database *DAT₂* or because the driver has entered a wrong the on-vehicle infotelematic system 2 system 2 selects from the database *DAT₂* the performance profile not associated with any identifier code, preferably a reduced performance profile, for example the profile *P₁*.

Next, in block 110 the electronic control unit of the on-vehicle infotelematic system 2 sends to the electronic control unit of the engine the information corresponding to the aforesaid performance profile so that, on the basis of the information received, the latter will control the engine of the vehicle according to the reduced performance profile.

From an examination of the characteristics of the present invention, the advantages that it enables emerge clearly.

Association of a specific performance profile to a driver and the procedure from identification and authentication of the driver at key-on enable a considerable increase in the level of safety of the driver and of the passengers in so far as the possibility whether to, activate a speed-limiter device is not left to the complete discretion of the driver and the effective implementation of the specific performance profile associated with the driver who is at the wheel of the vehicle is guaranteed.

Furthermore, the use of an on-vehicle infotelematic system already provided on board the vehicle in order to control setting of performance profiles of the engine does not require the addition on board the vehicle of auxiliary control systems and/or devices.

Finally, it is clear that modifications and variations may be made to the system described and illustrated herein without thereby departing from the sphere of protection of the present invention, as defined in the annexed claims.

Instead of the USB mass-storage device 5 and of the corresponding USB socket 3, the infotelematic system could comprise any other data-storage device, for example a smart card, with a corresponding interface. Alternatively, the recognition code could be sent to the on-vehicle infotelematic system 2 via a PDA, a personal navigation device, or a smartphone via Bluetooth or WI-FI connection.

In addition, it is clear how the infotelematic system and the electronic control unit of the engine may be configured for implementing any number of different performance profiles.

## Claims

1. An on-vehicle infotelematic system (2) comprising:
• interface means (3) for a data-storage electronic device (5); and
• electronic control and processing means connected to said interface means (3) and configured to communicate with an electronic vehicle engine control unit;
**characterized in that** said electronic control and processing means are further configured to:
• detect a presence or an absence of a data-storage electronic device (5) connected to said interface means (3); and
• send to said engine control unit a control signal which is a function of the presence or absence of a data-storage electronic device (5) connected to said interface means (3), in such a way that said engine control unit implements a corresponding engine control mode such as to achieve a corresponding engine performance profile (*P₁*, *P₂*) .

2. The system according to Claim 1, wherein said electronic control and processing means are configured to send to said engine control unit a control signal which is a function of the presence of a data-storage electronic device (5) connected to said interface means (3) in such a way that said engine control unit implements a corresponding engine control mode such as to achieve a corresponding engine performance profile *(P₁, P₂*) associated with a vehicle driver.

3. The system according to Claims 1 and 2, wherein said electronic control and processing means are configured to send to said engine control unit:
• a first control signal for implementing an engine control mode corresponding to a first engine performance profile (*P₁*) not associated with any vehicle driver, when the absence of the data-storage electronic device (5) connected to said interface means (3) is detected; or
• a second control signal for implementing an engine control mode corresponding to a second engine performance profile (*P₁*) associated with a first vehicle driver; or
• a third control signal for implementing an engine control mode corresponding to a third engine performance profile (*P₂*) associated with a second vehicle driver,
when the presence of the data-storage electronic device (5) connected to the interface means (3) is detected.

4. The system according to Claim 3, wherein said first and second engine performance profiles (*P₁*) are profiles that reduce at least one pre-set threshold value of at least one engine performance characteristic quantity, and wherein said third performance profile (*P₂*) is a profile that enables the engine to reach the pre-set threshold value.

5. The system according to Claim 4, wherein said quantity characteristic of the engine performance is at least one from among vehicle speed, engine power, and engine torque.

6. The system according to Claim 5, wherein said electronic control and processing means are further configured to:
• implement a vehicle driver identification procedure; and
• send to said engine control unit the second or the third control signal based on an identification procedure result.

7. The system according to Claim 6, wherein said electronic control and processing means are further configured to send to said engine control unit:
• the second control signal when no driver or said first driver is identified; or
• the third control signal when said second driver is identified.

8. The system according to any one of the preceding claims, wherein said electronic control and processing means are further configured to:
• detect an engine key-on;
• measure a time interval (*Tₗₐₛₜ₋ₚ*) elapsed from the last engine turning-off to said engine key-on; and
• send to said engine control unit a fourth control signal for implementing an engine control mode corresponding to the last engine performance profile (*P₁*) implemented by said engine control unit, when the absence of said data-storage electronic device (5) connected to said interface means (3) is detected and said time interval (*Tₗₐₛₜ₋ₚ*) is shorter than a storage time (*Tₘₑₘ*) of said last engine performance profile implemented by said engine control unit.

9. The system according to any one of the preceding claims, wherein said data-storage electronic device (5) is a USB mass-storage device (5), and wherein said interface means (3) comprise a USB interface (3) for connecting said USB mass-storage device (5) with said electronic control and processing means.

10. A method for setting a performance profile of a vehicle, comprising:
• detecting, by means of electronic control and processing means of an on-vehicle infotelematic system connected to interface means (3) and configured to communicate with an electronic vehicle engine control unit, a presence or an absence of a data-storage electronic device (5) connected to said interface means (3); and
• sending to said engine control unit a control signal which is a function of the presence or absence of a data-storage electronic device (5) connected to said interface means (3) in such a way that said engine control unit implements a corresponding engine control mode such as to achieve a corresponding engine performance profile (*P₁, P₂*).

11. The method according to Claim 10, further comprising:
• sending to said engine control unit a control signal which is a function of the presence of a data-storage electronic device (5) connected to said interface means (3) in such a way that said engine control unit implements a corresponding engine control mode such as to achieve a corresponding engine performance profile (*P₁, P₂*) associated with a vehicle driver.

12. The method according to Claim 11, further comprising:
• sending to said engine control unit a first control signal for implementing an engine control mode corresponding to a first engine performance profile (*P₁*) not associated with any vehicle driver, when the absence of said data-storage electronic device (5) connected to said interface means (3) is detected; or
• sending to said engine control unit a second control signal for implementing an engine control mode corresponding to a second engine performance profile (*P₁*) associated with a first vehicle driver; or
• sending to said engine control unit a third control signal for implementing an engine control mode corresponding to a third engine performance profile (*P₂*) associated with a second vehicle driver,
when the presence of said data-storage electronic device (5) connected to said interface means (3) is detected.

13. The method according to Claim 12, wherein said first and second performance profiles (*P₁*) are profiles that reduce at least one pre-set threshold value of at least one engine performance characteristic quantity, and wherein said third performance profile (*P₂*) is a profile that enables the engine to reach said pre-set threshold value.

14. The method according to Claim 13, further comprising:
• implementing a driver identification procedure; and
• sending to said engine control unit said second control signal or said third control signal based on an identification procedure result.

15. The method according to Claim 14, further comprising:
• sending to said engine control unit said second control signal when no driver or said first driver is identified; or
• sending to said engine control unit said third control signal when said second driver is identified.

16. The method according to Claim 15, further comprising:
• detecting an engine key-on;
• measuring a time interval (*Tₗₐₛₜ₋ₚ*) that has elapsed from the last engine turning-off to said engine key-on; and
• sending to said engine control unit a fourth control signal for implementing an engine control mode corresponding to the last engine performance profile (*P₁*) implemented by said engine control unit, when the absence of said data-storage electronic device (5) connected to said interface means (3) is detected and said time interval (*Tₗₐₛₜ₋ₚ*) is shorter than a storage time (*Tₘₑₘ*) of said last engine performance profile implemented by said engine control unit.

17. The method according to Claim 16, wherein said data-storage electronic device (5) is a USB mass-storage device (5), and wherein said interface means (3) comprise a USB interface (3) for connecting said USB mass-storage device (5) to said electronic control and processing means.

18. The method according to any one of Claims 11 to 17, further comprising:
- storing in said engine control unit a first database (*DAT₁*) containing information corresponding to said engine control modes necessary for implementing said first (*P₁*), second (*P₁, P₂*), and third (*P₁*) engine performance profiles;
- storing in said engine control unit of said on-vehicle infotelematic system:
• information corresponding to respective control signals of said first (*P₁*) , second (*P₁, P₂*), and third (*P₁*) engine performance profiles;
• information related to a first driver identification code (*C_{id}*) and a second driver identification code (*C_{id}*) ;
• information related to the association of said first driver identification code (*C_{id}*) with said second engine performance profile (*P₁*) and to the association of said second driver identification code (*C_{id}*) with said third engine performance profile (*P₁*),
• said storage time (*Tₘₑₘ*) of the last engine performance profile implemented by said engine control unit; and
- storing within each data-storage electronic device (5) said information corresponding to said first driver identification code (*C_{id}*) or to said second driver identification code (*C_{id}*), and said information related to the association of said first driver identifier code (*C_{id}*) with said second engine performance profile (*P₁*) or to the association of said second driver identifier code (*C_{id}*) with said third engine performance profile (*P₁*).
